Europäisches Patentamt

European Patent Office

Office européen des brevets

(11) Veröffentlichungsnummer: **0 208 261**
**A2**

(12) **EUROPÄISCHE PATENTANMELDUNG**

(21) Anmeldenummer: 86109057.9

(22) Anmeldetag: 03.07.86

(51) Int. Cl.⁴: **B 65 C 9/25**
**B 65 C 3/16**

(30) Priorität: 12.07.85 DE 8520132 U
06.02.86 DE 3603688

(43) Veröffentlichungstag der Anmeldung:
14.01.87 Patentblatt 87/3

(84) Benannte Vertragsstaaten:
AT BE CH DE FR GB IT LI LU NL SE

(71) Anmelder: CERAMI COLOR Gesellschaft für
Hartfaserbeschichtung m.b.H.
Fasanerlestrasse 1
D-6452 Hainburg 1(DE)

(72) Erfinder: Schliessmann, Kurt
Pfarrstrasse 20
D-6053 Oberthausen(DE)

(74) Vertreter: Schickedanz, Willi
Langener Strasse 70
D-6050 Offenbach/Main(DE)

(54) Verfahren und Vorrichtung zum Beschichten von Flächengebilden.

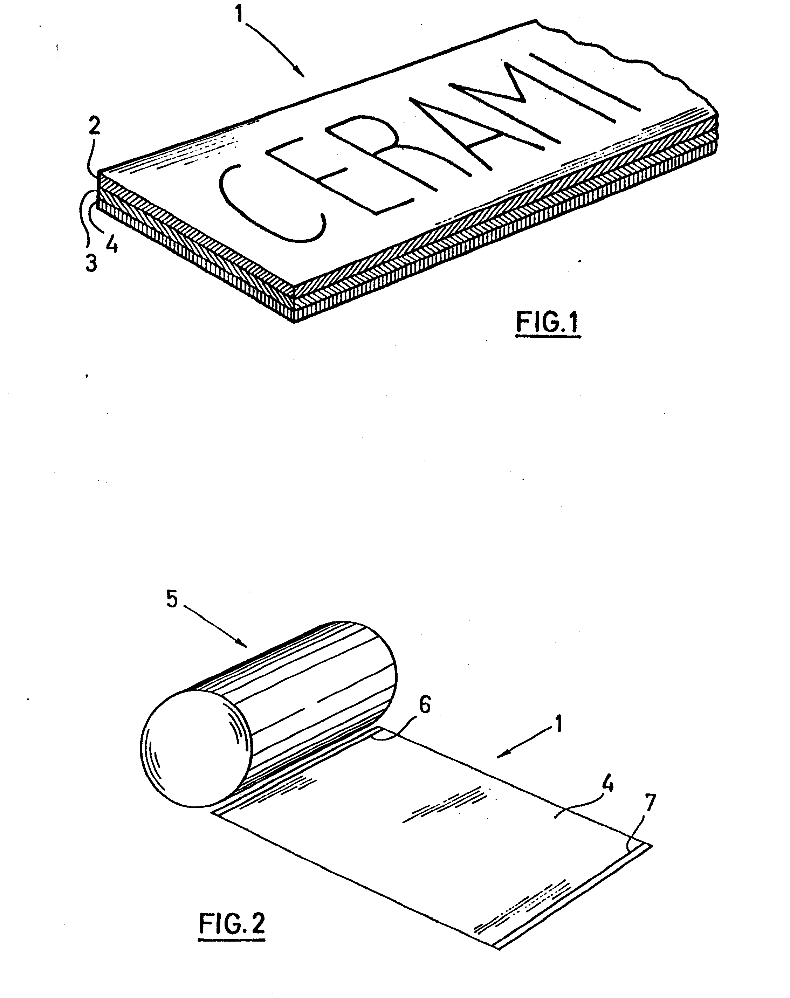

(57) Die Erfindung betrifft ein Verfahren zur Beschichten von Flächengebilden (5) mit einem Informationsträger, z.B. einer farbigen Schicht, unter Verwendung einer im wesentlichen rechteckförmigen Kunststoff-Folie (1), die ein- oder mehrschichtig mit Folienfarbe versehen ist und die einen Kleber (4) aufweist, der entweder auf die Folienfarbe oder auf die mit Folienfarbe versehene Seite der Kunststoff-Folie (1) aufgetragen ist. Hierbei wird ein Kleber (4) verwendet, der erst bei einer bestimmten Temperatur aktiviert wird. Die Kunststoff-Folie (1) wird mit ihrem Rand (z. B. 6) an dem rotationssymmetrischen Flächengebilde (5), z. B. einer Dose, angebracht und auf diesen Flächengebilde (5) abgerollt. Anschließend wird die mit dem Kleber (4) versehene Kunststoff-Folie (1) erwärmt (Figur 2).

FIG. 2

EP 0 208 261 A2

# VERFAHREN UND VORRICHTUNG ZUM BESCHICHTEN
# VON FLÄCHENGEBILDEN

Die Erfindung betrifft ein Verfahren und eine Vorrichtung zum Beschichten von Flächengebilden mit einem Informationsträger, z.B. einer farbigen Schicht, unter Verwendung einer im wesentlichen rechteckförmigen Kunststoff-Folie, die ein- oder mehrschichtig mit Folienfarben versehen ist und die einen Kleber aufweist, der entweder auf die Folienfarbe oder auf die nicht mit Folienfarbe versehene Seite der Kunststoff-Folie aufgetragen ist.

Auf zahlreichen Gebieten der Technik werden Grundelemente mit dünnen Schichten versehen, um bestimmte Effekte zu erzielen. Diese Schichten können aus Holz-Furnieren, aus Lack, aus Kunststoff oder sonstigen Materialien bestehen. Mit Hilfe solcher Schichten ist es möglich, preisgünstigen Materialien den Anschein höherwertiger Materialien zu geben. Beispielsweise können Kunststoff-Folien, welche die Maserung und den Farbton von Teakholz haben, echte und teure Teakholzfurniere in vielen Fällen ersetzen. Ein anderes wichtiges Anwendungsgebiet dünner Schichten ist z.B. die Herstellung von bedruckten Flaschen und Dosen. Neben den herkömmlichen und bedruckten Papieretiketten, die auf die Flaschen oder Dosen geklebt werden, wird immer häufiger die Rundum-Etikettierung verwendet, bei welcher der gesamte Flaschen- oder Dosenumfang als Darstellungsfläche dient. Die Flaschen und Dosen sehen nach einer solchen Rundum-Beschichtung aus, als seien sie bemalt worden.

Es ist bereits bekannt, eine tiefgezogene Dose mittels eines Polyester-

Lacks weißzulackieren, in einem Trockenofen zu trocknen und anschließend mit einem Polyester-Klarlack zu versehen, der für spezielle Farbsubstanzen aufnahmefähig ist. Auf diesem Klarlack wird sodann ein farbig
bedrucktes Papier gelegt, dessen Farbstoff bei ca. 200° C gasförmig
wird und in die Oberfläche des Klarlacks migriert (DE-OSen 29 14 704,
32 28 096, 33 10 120, 32 29 815, EU-PS 14 901, EU-OS 119 548).

Der Nachteil dieses Verfahrens besteht darin, daß kein sehr scharfes
Bild entsteht, weil kein Direktdruck möglich ist, sondern die Abbildung
erfolgt. Insbesondere Metallfarben wie Gold und Silber lassen sich hierbei nicht wiedergeben, weil Metalle nur schwer verdampfen.

Es ist weiterhin bekannt, eine Limonadenflasche ohne direkte oder indirekte Lackierung mit einer farblichen Darstellung zu versehen. Hierbei
wird eine spezielle Kunststoff-Folie (z.B. GENOTHERM der Fa. Kalle
aus Wiesbaden) mit einer farblichen Darstellung bedruckt und dann zu
Endlos-Schläuchen geformt, die aufgewickelt werden können. Ein solcher
Schlauch wird sodann über eine Flasche gestülpt und an einer vorgegebenen Stelle abgeschnitten. Um die Flasche herum befindet sich somit
ein bedruckter Kunststoff-Folienzylinder, der jedoch noch nicht fest an
der Flasche anliegt. Um dieses feste Anliegen zu bewirken, wird eine
Erwärmung auf ca. 80° C vorgenommen, wodurch der Kunststoff-Zylinder aufschrumpft. Nachteilig ist bei diesem Verfahren, daß ein relativ
teurer und stark schrumpfungsfähiger Kunststoff verwendet werden muß.

Es sind weiterhin verschiedene andere Verfahren bekannt, um Etiketten
oder dergleichen auf einer Dose oder einer Flasche aufzubringen (DE-PS
1 928 596, DE-OSen 2 028 236, 2 o52 877, 2 433 184, 2 433 190,
3 121 359 3 105 971, 2 715 793, EU-OS 0 144 198). Diese Verfahren
sind jedoch entweder sehr aufwendig und teuer oder sie gestatten keine
brillianten Farbdarstellungen auf den Dosen und Flaschen.

Es ist ferner ein Verfahren bekannt, mit dem Verbindungen hergestellt
werden können, die auf Folien aufbringbar sind, um einen trockenen, nicht-klebrigen Film zu erzeugen, der klebrig wird, wenn er schmilzt, wobei die Klebrigkeit auch noch während einer langen Zeit des Abkühlens bestehen bleibt (US-PS 3 447 954). Außerdem sind hitzeaktivierbare Klebebänder und Etiketten bekannt, deren Klebeschicht bei Raumtemperatur eine inaktive Trockengummierung darstellt (deutsche Zeitschrift "Gummi, Asbest, Kunststoff", Nr.3, 1967, S.214). Die Klebekraft tritt hierbei erst beim Erwärmen auf Heizplatten oder unter Wärmestrahlen bei 80° bis 120° C unmittelbar vor Verklebung ein und kann sekunden-, minuten- oder auch stundenlang ohne weitere Erwärmung aufrechterhalten werden, je nach manueller oder maschineller Auftragungstechnik.

Schließlich ist auch noch ein bedrucktes Klebeband bekannt, das auf der Grundlage einer Polyäthylen- oder Polypropylenfolie aufgebaut ist (französische Patentanmeldung Nr. 2 259 887). Bei diesem Klebeband werden der Aufdruck und der Überzug des Klebers auf derselben Seite des Bands aufgetragen. Außerdem wird nur die bedruckte und beschichtete Seite einer Korona-Behandlung unterworfen, während die andere Seite der Folie nicht-klebend bleibt.

Der Erfindung liegt die Aufgabe zugrunde, auf im wesentlichen rotationssymmetrischen Körpern, z.B. auf Flaschen oder Dosen, farbige Bilder und dergleichen in hoher Farbqualität und Brillianz mit einfachen Mitteln aufzubringen.

Diese Aufgabe wird durch folgende Schritte gelöst:
a) Verwendung eines an sich bekannten Klebers  , der erst bei einer bestimmten Temperatur, die mindestens über der jeweiligen Umgebungstemperatur liegt, aktiviert wird;
b) Verwendung eines im wesentlichen rotationssymmetrischen Flächengebildes;
c) Anbringen der im wesentlichen rechteckigen Kunststoff-Folie mit einem Rand an dem rotationssymmetrischen Flächengebilde, wobei die mit dem Kleber versehene Seite der Kunststoff-Folie der Oberfläche des rotationssymmetrischen Flächengebildes gegenüberliegt;

d) Vollständiges Aufbringen der Kunststoff-Folie auf der Oberfläche des rotationssymmetrischen Flächengebildes durch Abrollen der Folie und/oder des Flächengebildes;

e) direktes oder indirektes Erwärmen der mit dem Kleber versehenen Kunststoff-Folie.

Der mit der Erfindung erzielte Vorteil besteht insbesondere darin, daß Dosen auf ihrem gesamten Umfang mit nahtlos erscheinenden Mustern oder Bildern versehen werden können, die den Eindruck erwecken, als seien sie Bestandteil der Dosenoberfläche. Die Herstellungskosten sind dabei sehr gering, weil anstelle einer teuren Schrumpffolie eine preiswerte Folie aus Polyäthylen oder Polypropylen, insbesondere aus biaxial gestrecktem Polypropylen, verwendet werden kann, die eine Dicke von nur 15-60 µm hat. Die erwähnte Schrumpffolie muß in der Regel doppelt so dick ausgelegt werden, um vergleichbare Eigenschaften zu haben. Ein weiterer Vorteil der Erfindung besteht darin, daß ihre Anwendung nicht nur bei Weißblechdosen möglich und sinnvoll ist, sondern daß sie auch bei Behältern aus Glas und anderen umweltfreundlichen Materialien verwendet werden kann. Insbesondere die Anwendung bei Dosen aus ultraleichtem Polyäthylenterephtalat ist vorteilhaft, weil bei der Verbrennung dieses Kunststoffs nichts außer Wasser und Kohlendioxid entsteht. Diese Dosen erweisen sich somit als umweltfreundlich. Besonders vorteilhaft ist es auch, den Kleber mit der Druckfarbe zu mischen und dieses Gemisch auf die Folie anstatt Folienfarbe aufzutragen. Werden Farbe und Kleber nicht auf derselben Seite der Folie aufgebracht, so haben die Farben weniger Glanz, weil sie nicht durch eine glänzende Folie hindurchschimmern. Um auch in diesem Fall ein brilliantes Bild zu erzeugen, wird die farbliche Darstellung mit einem lösungsfreien Lack überzogen, der durch Elektronenstrahlbeschuß ausgehärtet wird.

Die Kunststoff-Folie kann vor dem Auftragen der Folienfarben klarsichtig oder undurchsichtig sein. Das Auftragen der Folienfarben kann dabei mittels Tiefdruck oder Flexodruck erfolgen. Auch das Anheften der Folie an eine Dose, damit die Folie anschließend um die Dose herumgeschlungen werden kann, kann auf verschiedene Weise erfolgen, beispielsweise durch elektrostatische Anheftung oder durch Anheftung mittels eines am Folienrand vorgesehenen Spezial-Klebers. Die Aktivierungstemperatur des Klebers hängt auch von dem Material des Trägers ab. Bei einem Träger aus Glas muß bei gleichem Kleber beispielsweise die äußere Temperatur auf 170° C eingestellt werden, während bei Kunststoff-Träger 70°-80° und bei Trägern aus Weißblech etwa 130° C genügen können. Selbstverständlich können auch verschiedene Kleber verwendet werden, je nachdem, aus welchem Material die Träger bestehen.

Für die Erwärmung des Klebers sind nahezu alle bekannten Erwärmungsmethoden einsetzbar: Induktives Erwärmen, Mikrowellenaufheizung, Heiz-·strahlungserwärmung etc.

Wird die Folienfarbe mit einem Kleber gemischt, so ist es zweckmäßig, bei Buntfarben etwa 10% Kleber hinzuzumischen, während bei Weiß etwa 20 Gewichtsprozent Kleber hinzugemischt werden.

Von besonderer Bedeutung ist die Auswahl der Kunststoff-Folie. Es hat sich aufgrund von Versuchen gezeigt, daß die an sich schrumpfungsunfähigen Polypropylenfolien bei dem erfindungsgemäßen Verfahren doch etwas schrumpfen und sich ganz eng an die Dosen und Flaschen anlegen. Dies ist insbesondere bei Dosen von Verteil, da diese oft unmittelbar vor dem oberen Dosenrand eine kleine umlaufende Nut besitzen, in die bei Verwendung von absolut schrumpfungsunfähigen Folien kein Folienmaterial eindringen könnte. Die erfindungsgemäß verwendeten biaxial gestreckten Polypropylen-Folien schmiegen sich jedoch auch in diese Nut.

Als besonders vorteilhaft hat sich auch die Verwendung von geschäumten Polypropylen-Folien für den Fall herausgestellt, daß die Folienfarbe und der Kleber nicht auf derselben Seite der Folie aufgetragen werden. Der anschließende Überzug der Farbschicht mit einem Speziallack und die Bestrahlung dieses Lacks mit Elektronenstrahlen verleiht den Farben eine hohe Brillianz.

Die Aushärtung des an sich bekannten Lacks mittels Elektronenstrahlen ist als solche bekannt (vergl. Zeitschrift "Adhäsion", 1983, Heft 10, Seite 7 bis 10; Zeitschrift "Das Papier", 1985, 39. Jahrgang, Heft 10A, Seite V 102 bis V 110). Strahlenhärtbare Lacke und Kleber sind im Prinzip ähnlich aufgebaut wie lösemittelhaltige Systeme, jedoch mit dem Unterschied, daß das Lösemittel durch reaktive Verdünner wie Monomere ersetzt wird. Das Bindemittel, vorwiegend acrylierte Verbindungen, enthält funktionelle Gruppen wie Kohlenstoff-Kohlenstoff-Doppelbindungen, die unter Einfluß der Elektronenbestrahlung aufgespalten werden und sogenannte Radikale bilden, die die Polymerisation einleiten. In der unmittelbar anschließenden Wachstumsphase (Propagation) lagern sich weitere Monomermoleküle an die radikalischen Kettenenden an und bilden dabei ein dreidimensionales unlösliches Netzwerk. Die Wachstumsphase wird durch die Abbruchreaktion beendet. Die Elektronenstrahlhärtungstechnik wird heute hauptsächlich in der Papier- und Kunststoffveredelung eingesetzt, um strahlenhärtbare Lacke, Druckfarben oder Kleber auszuhärten. Die großen Vorteile dieser Technik sind: hohe Aushärtegeschwindigkeit in Bruchteilen von Sekunden, direkte Weiterverarbeitung, keine thermische Belastung empfindlicher Folien, keine Trockner erforderlich und somit Einsparung von Heizenergie, kein Freisetzen von Lösungsmitteln, keine Lösungsmittelrückgewinnungs- oder -verbrennungsanlagen notwendig, geringer Platzbedarf der Anlage.

Während sowohl die Ultraviolettlicht- als auch die Elektronenstrahlhärtungsverfahren im Prinzip die gleichen polymerisationsfähigen Ausgangsmaterialien verwenden, unterscheiden sich die Strahlenquellen beider Verfahren erheblich voneinander. Für die UV-Härtung finden Hg-Hochdrucklampen sowie elektrodenlose Lampen und Xenon-Blitzlampen etc. Verwendung. Die Lampenleistungen liegen bei diesen Strahlenquellen im Bereich von 50 bis zu 150 W/cm Strahlerlänge. In der Elektronenstrahltechnik kann, je nachdem, ob Punkt- oder Linearkathoden zur Emission verwendet werden, zwischen Scanner- und Curtain-System unterschieden werden. Der wesentliche Unterschied zwischen der Elektronen- und der UV-Strahlung ist die um den Faktor $5 \times 10^{4}$ höhere Energie der emit-

tierten Elektronen. Diese höhere Strahlungsenergie macht im Bereich der Elektronenstrahlhärtung die Verwendung von Photoinitiatoren überflüssig und garantiert eine höhere Eindringtiefe der Strahlung in den Absorber, d.h. in das vorgegebene Veredelungsmittel. Die Eindringtiefe kann über die Beschleunigungsspannung des Strahlers geregelt werden.

Es ist mit dem UV- oder Elektronenstrahlverfahren nicht nur eine Aushärtung von Klebern und Lacken möglich, sondern auch Farben können "getrocknet" werden. Die Farbenhersteller können heute bereits eine haltige Palette strahlen-trockenbare Offset-, Sieb- und Buchdruckfarben anbieten.

Ausführungsbeispiele der Erfindung sind in der Zeichnung dargestellt und werden im folgenden näher beschrieben. Es zeigen:

Fig.1 eine Kunststoff-Folie nach der Beschichtung;

Fig.2 das Aufbringen einer Kunststoff-Folie auf eine Dose;

Fig.3 das automatische Zuführen einer beschichteten Kunststoff-Bahn zu mehreren Dosen;

Fig.4 eine Anordnung für die Elektronenbestrahlung beschichteter Dosen;

Fig.5 eine Anordnung für die Elektronenbestrahlung einer beschichteten Folienbahn.

In der Fig.1 ist eine beschichtete Kunststoff-Folie 1 dargestellt, die im wesentlichen aus drei Schichten besteht. Die obere Schicht 2 besteht aus einer klarsichtigen oder undurchsichtigen Folie, z.B. aus einer biaxial gestreckten Polypropylenfolie. Diese Folie braucht nur geringfügig schrumpfungsfähig zu sein und ist deshalb, bei geringer Stärke, preiswert. Auf diese obere Schicht 2 wird, z.B. im Tiefdruckverfahren, eine zweite Schicht 3 aufgetragen, welche den eigentlichen Informationsträger ausmacht. Mit dieser Schicht, die ihrerseits z.B. aus sieben nicht im einzelnen dargestellten Farbschichten bestehen kann, ist es möglich, alle denkbaren Beschriftungen oder Bilder zu realisieren. Im Beispiel der Fig.1

ist das Wort CERAMI realisiert, das durch die klarsichtige Folie 2 hindurchscheint. Auf diese ein- oder mehrschichtige Farbschicht 3 wird ein Kleber 4 aufgetragen, der erst bei einer bestimmten Temperatur, z.B. bei 200° C, aktiviert wird.

In der Fig. 2 ist die beschichtete Kunststoff-Folie 1 noch einmal dargestellt, und zwar mit der Kleber-Schicht 4 nach oben.

Die beiden anderen Schichten 2 und 3 sind in der Fig. 2 der Einfachheit halber weggelassen.

Ein rohrförmiger Körper 5, z.B. ein Dosenkörper, liegt der beschichteten Folie 1 gegenüber.

Zusätzlich zu der Kleber-Schicht 4 sind zwei schmale Streifen 6,7 eines anderen Klebers auf der beschichteten Folie vorgesehen. Diese Kleber-Streifen 6,7 dienen lediglich zum Anheften der Folie 1 an der Dose 5. Zunächst wird der Streifen 6 auf den Dosenumfang gelegt. Sodann wird die Folie 1 um den Umfang der Dose 5 herumgeschlungen, bis sich die beiden Streifen 6,7 gegenüberliegen und praktisch keinen freien Spalt mehr auf der Dosenoberfläche lassen. Hierauf wird der Kleber 4 auf seine Aktivierungstemperatur aufgeheizt, wobei das Aufheizen auf verschiedene Weise geschehen kann. Beispielsweise kann zuvor die Dose 5 einen Ofen durchlaufen haben, oder der Kleber wird mittels Mikrowellen aufgeheizt. Es ist auch möglich, die Dose 5 induktiv oder über Wirbelströme zu erhitzen.

Durch geeignete mechanische Behandlung der Dose 5 und/oder der Folie 1 können elektrostatische Ladungen aufgebaut werden, die ein Anheften des Endes 6 der Folie 1 bewirken. In diesem Fall ist es möglich, auf den zusätzlichen Anheft-Kleber zu verzichten.

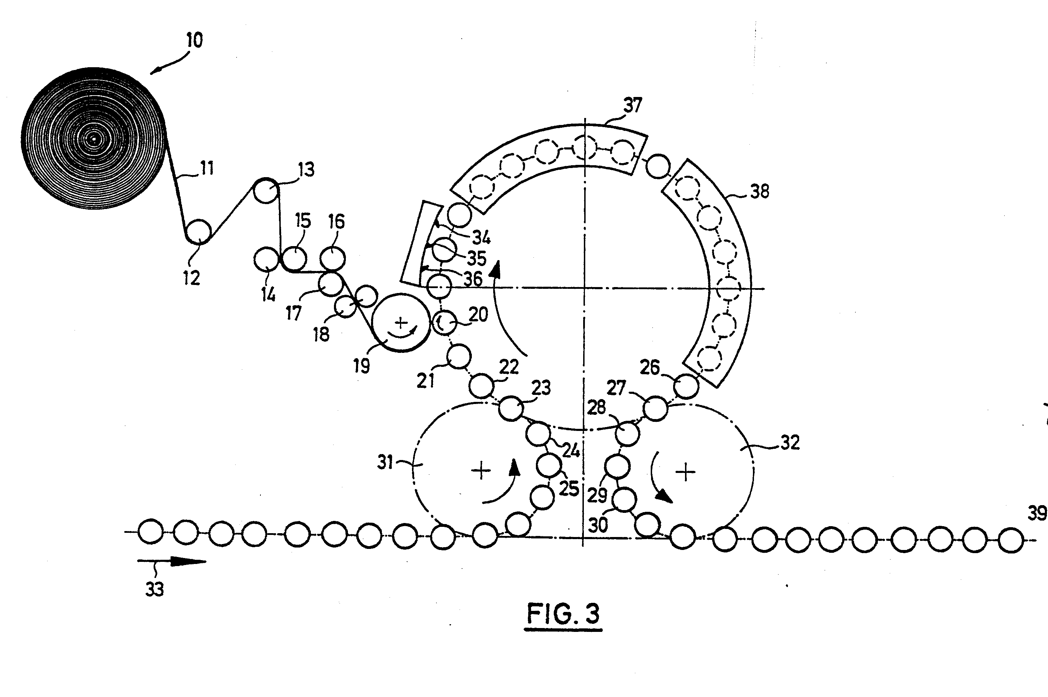

In der Fig. 3 ist eine Vorrichtung gezeigt, mit der Dosen mit der erfindungsgemäßen Folie beschichtet werden können.

0208261

Ein zur Rolle 10 gewickeltes Folienband 11 wird über Bandführungswalzen 12-17 über ein Messer 18 einer Vakuumübergabetrommel 19 zugeführt, die das Band 11 ansaugt, so daß es fest auf der Trommel 19 aufliegt.

An dieser Trommel 19 wird eine Dose 20 vorbeigeführt, auf welche das Folienband 11 aufgebracht wird. Diese Dose 20 ist, zusammen mit zahlreichen weiteren Dosen 20-30, auf einer Fördereinrichtung angeordnet, die in der Fig. 3 lediglich durch zwei Antriebswalzen 31,32 angedeutet ist. Die Dosen werden, von links kommend und in Richtung des Pfeils 33 laufend, an der Trommel 19 vorbeigeführt, durchlaufen anschließend einen Bereich mit elektrostatischen Aufladungselektroden 34,35,36 und gelangen sodann über Heizkanäle 37,38 zum Ausgang 39.

Bei dem in der Fig. 3 gzeigten Beispiel wird die Folie also nicht mittels eines Spezialklebers an der Dose angeheftet, sondern mittels elektrostatischer Kräfte.

Die Folienlänge, die auf die Dose 20 aufgebracht wird, wird durch das Messer 18 so bestimmt, daß die ganze Dose 20 umwickelt wird. Damit die relativ lose herumgeschlungene Folie 11 nicht von der Dose 20 fällt, wird sie durch elektrostatische Kräfte auf die Dose 20 gedruckt. Jetzt gelangt die Dose 20 in den Heizkanal 37, wo der Kleber auf seine Ak-tivierungstemperatur gebracht wird und die Folie fest mit der Dose verbindet. Ein zweiter Heizkanal 38 ist vorgesehen, um eventuell eine zwei-te Aktivierungstemperatur zu erzeugen.

Es versteht sich, daß die Kunststoff-Folie, bevor sie mit Farbe und/oder Kleber versehen wird, einer elektrostatischen Behandlung unterworfen wird. Diese Behandlung dient dazu, die Folie für Farben und/oder Kleber aufnahmefähig zu machen. Da diese Behandlung als solche bekannt ist, wird sie nicht näher beschrieben.

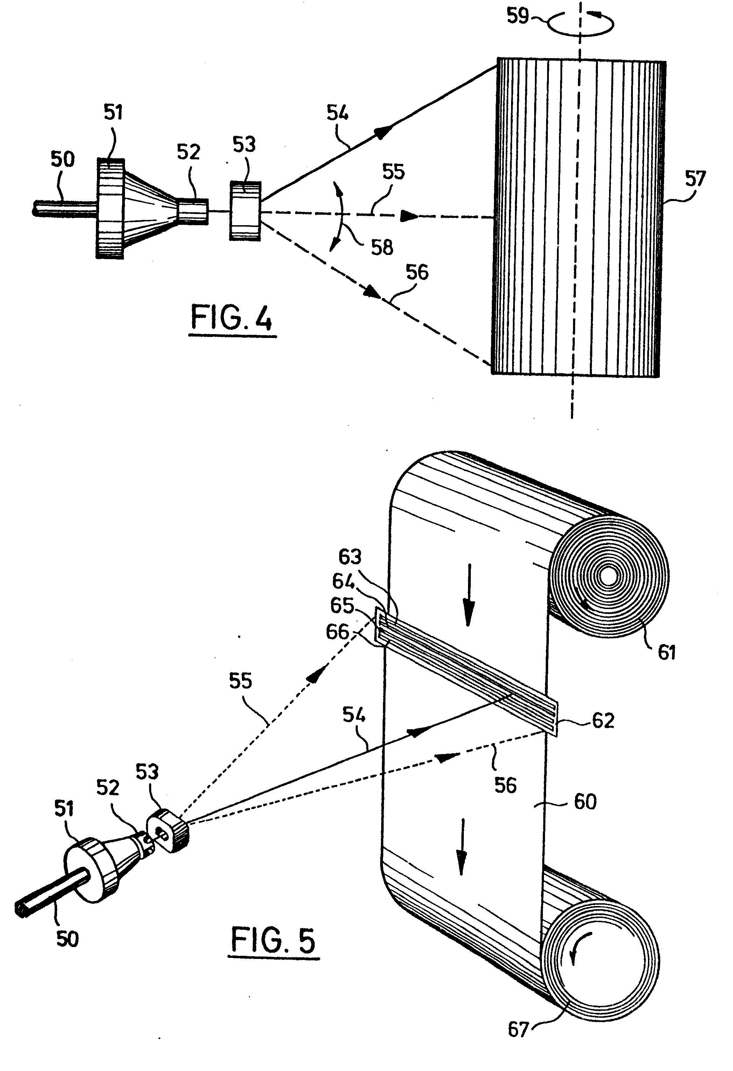

In der Fig.4 ist eine Anordnung dargestellt, welche das Prinzip der Elektronenstrahlhärtung zeigt. Hierzu wird an einen Anschluß 50 eine Beschleunigungsspannung gelegt, die auf eine Vorrichtung mit einem Isolator 51 gegeben wird. Einem Wehneltzylinder 52 liegt eine Elektronenstrahl X-Y-Ablenkung 53 gegenüber. Dieser an sich bei jedem Fernsehgerät vorhandene Einrichtung ermöglicht es, einen Elektronenstrahl 54 von oben nach unten oder umgekehrt, wie es der Pfeil 58 zeigt, abzulenken. Die Oberfläche einer Dose 57, die mit einem nicht dargestellten Lack überzogen ist, wird von dem Elektronenstrahl 54, von dem zwei weitere Positionen 55,56 gestrichelt dargestellt sind, von oben nach unten abgetastet. Wird die Dose 57 um ihre senkrechte Achse gedreht, wie es der Pfeil 59 andeutet, so kann der Lack über den ganzen Umfang der Dose 57 ausgehärtet werden. Durch eine geeignete Steuerung des Elektronenstrahls 54 in horizontaler Richtung ist es möglich, die Drehgeschwindigkeit der Dose 57 zu berücksichtigen und exakt vertikale Abtastungen vorzunehmen.

Im Unterschied zu dem Elektronenstrahl in einer Fernsehröhre handelt es sich bei dem Elektronenstrahl 54 um einen relativ kräftigen Strahl von etwa 6 mm Dicke. Die Abbremsung dieses Elektronenstrahls erzeugt die sogenannte Brems- oder Röntgenstrahlung. Für die Abschirmung dieser Strahlung können Bleiplatten vorgesehen sein.

In der Fig.5 ist eine weitere Möglichkeit des Aushärtens von Lack mittels Elektronenstrahlen dargestellt. Das Elektronenstrahl-Erzeugungs und -Ablenkungssystem 50-53 entspricht demjenigen der Fig.4. Im Gegensatz zur Anordnung der Fig.4 wird jedoch bei der Anordnung der Fig.5 nicht die Dose mit dem Lack bestrahlt, sondern eine Folienbahn 60. Diese Folienbahn 60 wird von einer Rolle 61 abgewickelt und über eine Glende 62 mit Schlitzen 63-66 eine Walze 67 zugeführt. Auf der Rolle 61 ist die Folienbahn 60 bereits mit Farbe, mit einem Kleber und mit einem Lack versehen. Dieser Lack wird durch den durch die Schlitze 63-66 tretenden Elektronenstrahl 54 ausgehärtet.

Die Arbeitsgänge "Farbe auftragen", "Kleber auftragen", "Lack auftragen" und "Kleber aushärten" können auch fließbandmäßig oder wenigstens teilweise simultan erfolgen. Beispielsweise kann eine unbeschichte-

te Folienbahn, die von einer ersten Walze auf eine zweite Walze gewickelt wird, an einer ersten Stelle zwischen den beiden Walzen mit Farbe, an einer zweiten Stelle mit einem Kleber und an einer dritten Stelle mit einem Lack versehen werden. Die Aushärtung des Lacks kann dann an einer vierten Stelle erfolgen. Farbe und Kleber können dann, wenn sie nicht auf derselben Seite der Folienbahn angebracht werden, gleichzeit auf die Bahn gegeben werden.

Die komplett fertiggestellte Folienbahn wird sodann , wie in der Fig.3 gezeigt, den Dosen 20,21,23 zugeführt und in passende Stücke geschnitten. Diese Stücke werden auf die Dosen gebracht, welche hieraufeinen ersten Aufheiz-Kanal 37, der beispielsweise den Kleber auf seine Aktivierungstemperatur bringt und anschließend einen zweiten Aufheiz-Kanal 38, der beispielsweise die Folie auf ihre Dehnungstemperatur aufheizt, durchlaufen.

Selbstverständlich können die Funktionen der Aufheizkanäle 37,38 auch umgekehrt werden oder es wird mit dem Kanal 38 lediglich eine Art Nachbehandlung bewirkt.

## Patentansprüche

1. Verfahren zum Beschichten von Flächengebilden mit einem Informationsträger, z.B. einer farbigen Schicht, unter Verwendung einer im wesentlichen rechteckförmigen Kunststoff-Folie, die ein- oder mehrschichtig mit Folienfarbe versehen ist und die einen Kleber aufweist, der entweder auf die Folienfarbe oder auf die nicht mit Folienfarbe versehene Seite der Kunststoff-Folie aufgetragen ist, gekennzeichnet durch:

a) die Verwendung eines an sich bekannten Klebers (4), der erst bei einer bestimmten Temperatur, die mindestens über der jeweiligen Umgebungstemperatur liegt, aktiviert wird;

b) die Verwendung eines im wesentlichen rotationssymmetrischen Flächengebildes (5);

c) das Anbringen der im wesentlichen rechteckförmigen Kunststoff-Folie (2) mit einem Rand (z.B.6) an dem rotationssymmetrischen Flächengebilde (5), wobei die mit dem Kleber (4) versehene Seite der Kunststoff-Folie (2) der Oberfläche des rotationssymmetrischen Flächengebildes (5) gegenüberliegt;

d) das vollständige Aufbringen der Kunststoff-Folie (2) auf der Oberfläche des rotationssymmetrischen Flächengebildes (5) durch Abrollen der Folie (2) und/oder des Flächengebildes (5);

e) direktes oder indirektes Erwärmen der mit dem Kleber (4) versehenen Kunststoff-Folie (2).

2. Verfahren nach Anspruch 1, dadurch gekennzeichnet, daß in einem ein- oder zweistufigen Erwärmungsverfahren sowohl der Kleber (4) aktiviert, als auch die Kunststoff-Folie zum Schrumpfen gebracht wird.

3. Verfahren nach Anspruch 1, dadurch gekennzeichnet, daß die Kunststoff-Folie (2) vor dem Aufbringen der Folienfarben und/oder des Klebers (4) einem Korona-Verfahren unterworfen wird.

4. Verfahren nach Anspruch 1, dadurch gekennzeichnet, daß das rotationssymmetrische Flächengebilde (5) ein Zylinder ist, daß die mit Farbe (3) und Kleber (4) versehene rechteckige Kunststoff-Folie (2) mit einem ersten Rand (6) auf einer Geraden angesetzt wird, welche auf kürzestem Weg das untere Ende des Zylinders mit dem oberen Ende des Zylinders verbindet, und daß die Kunststoff-Folie (2) mit einem zweiten Rand (7) auf der erwähnten oder einer hierzu parallelen Geraden angesetzt wird.

5. Verfahren nach Anspruch 1, dadurch gekennzeichnet, daß die Folienfarbe (3) vor dem Aufbringen auf die Kunststoff-Folie (2) mit einem Kleber gemischt wird.

6. Verfahren nach Anspruch 1, dadurch gekennzeichnet, daß das rotationssymmetrische Flächengebilde (5) aus Polyäthylenterephtalat besteht.

7. Verfahren nach Anspruch 1, dadurch gekennzeichnet, daß die Folie (2) auf ihrer einen Seite mit der Folienfarbe (3) und auf der anderen Seite mit dem Kleber (4) versehen wird.

8. Verfahren nach Anspruch 7, dadurch gekennzeichnet, daß die Folienfarbe (2) mit einem Lack überzogen wird, der einer UV-Bestrahlung unterworfen wird.

9. Verfahren nach Anspruch 7, dadurch gekennzeichnet, daß die Folienfarbe mit einem lösungsmittelfreien Lack überzogen wird, der einer Elektronenstrahlbehandlung unterworfen wird.

10. Verfahren nach Anspruch 9, dadurch gekennzeichnet, daß die Elektronenstrahlen mittels eines Scanner-Systems auf den Lack gelangen.

11. Verfahren nach Anspruch 9, dadurch gekennzeichnet, daß die Elektronenstrahlen mittels des Curtain-Systems auf den Lack gelangen.

12. Verfahren nach einem oder nach mehreren der vorangegangenen Ansprüche, dadurch gekennzeichnet, daß die UV- oder Elektronenstrahlbehandlung gleichzeitig mit der Erwärmung der Folie oder zeitlich hierzu versetzt erfolgt.

13. Vorrichtung zur Durchführung des Verfahrens nach Anspruch 1, <u>gekennzeichnet durch</u>:

a) eine unbeschichtete Kunststoff-Folie;

b) eine Vorrichtung zum Aufdrucken von Farbe auf die Folie;

c) eine Vorrichtung zum Aufbringen eines Lacks auf die Farbe;

d) eine Vorrichtung zum Aufbringen eines Klebers auf die Folie;

e) eine Vorrichtung zum Aushärten des Lacks mittels eines Elektronenstrahls;

f) eine Vorrichtung für die Zuführung der fertig präparierten Kunststoff-Folie zu rotationssymmetrischen Körpern;

g) eine Vorrichtung zum Abschneiden eines Stücks von bestimmter Länge vom Folienband;

h) eine Fördereinrichtung für mehrere Dosen und

i) mindestens einen Wärmekanal, den die Dosen durchlaufen.

14. Vorrichtung nach Anspruch 13, <u>dadurch gekennzeichnet</u>, daß zwei Wärmekanäle (37,38) vorgesehen sind, von denen der eine den Kleber auf seine Aktivierungstemperatur aufheizt und von denen der andere die Folie auf ihre Schrumpf-Temperatur aufheizt.

15. Vorrichtung nach Anspruch 13, <u>dadurch gekennzeichnet</u>, daß die Vorrichtung zum Aushärten des Lacks ein Ablenksystem für einen Elektronenstrahl (54) aufweist, das den Elektronenstrahl in X- und Y-Richtung, bezogen auf die Folie, bewegt, wobei zwischen dem Ablenksystem und der Folie eine Blende (62) mit Schlitzen (63-66) vorgesehen ist.

1/3

0208261

CERAMI

FIG.1

FIG.2

**FIG. 3**

FIG. 4

FIG. 5